# EUROPEAN PATENT SPECIFICATION

(11) **EP 2 402 889 B1**
(45) Date of publication and mention of the grant of the patent: **07.09.2016**
(21) Application number: 11172349.0
(22) Date of filing: 01.07.2011
(51) Int. Cl.: G06K 19/04, G06K 19/077, H01R 13/00, H01R 35/00

(54) **Rotating mechanism and electronic device**
Drehmechanismus und elektronische Vorrichtung
Mécanisme rotatif et dispositif électronique

(30) Priority: 01.07.2010 CN 201020247323 U
(43) Date of publication of application: 04.01.2012
(73) Proprietor: Huawei Device Co., Ltd., Shenzhen, Guangdong 518129 (CN)
(72) Inventor: Zhang, Bin, Shenzhen, Guangdong 518129 (CN); Xiao, Jianjun, Shenzhen, Guangdong 518129 (CN)
(74) Representative: Isarpatent

(56) References cited:
- DE-A1- 10 254 529
- US-A1- 2008 268 678
- US-A1- 2010 151 698

## Description

### FIELD OF THE INVENTION

This invention relates to mechanical technologies, and in particular, to a rotating mechanism and an electronic device.

### BACKGROUND OF THE INVENTION

With the development of electronic technologies, people expect electronic products to be smaller and thinner, which require very thin fittings of the electronic products. For example, the thinnest hinge of a data card available now is 2 mm only.

To connect an ultra-thin data card to an electronic product rotationally, a rotating mechanism that fits in with the data card is required. However, the rotating mechanism of the electronic products in the prior art is complicated and oversized, and cannot fit in with the ultra-thin data card.

US 2010/151698 A1 discloses an electronic storage device having a multiple-direction rotation and allocation electrical connector. The electronic storage device for connecting with a host system includes a cover having a body section and a protection section bending from one end of the body section, and a main body having an electrical connector with an interface and defining a receiving space.

DE 10254529 A1 discloses a bus port connection device for inserting an additional universal serial bus port in an electronic device having jointed/guide shafts with a flexible device to couple onto an articulated unit. A casing has an inner chamber for installing an additional device and an oblong rectangular structure with an articulated unit (AU) with a clearance from a casing end section and a semi-circular structure.

US 2008/268678 A1 discloses a universal serial bus hub integrated with a rotating mechanism. The rotating mechanism includes a first component formed with a first opening and a first retention portion disposed on one edge of the first opening; a second component formed with a second opening to correspond to and stack up with the first opening to form an action hole, a second retention portion disposed on one edge of the second opening corresponding to the first opening; and a fastening member having a connecting portion and an elastic hooking portion.

### SUMMARY OF THE INVENTION

This invention provides a rotating mechanism and an electronic device according to claims 1 and 5, respectively, where the rotating mechanism fits in well with an ultra-thin electronic device.

A rotating mechanism provided in this invention includes a base assembly, a rotator assembly, and a riveting gasket.

The base assembly is riveted to the riveting gasket; the rotator assembly is sheathed to the base assembly, the riveting gasket restricts the rotator assembly onto the base assembly, and the rotator assembly is rotatable against the base assembly around an axial direction; and

The rotator assembly includes at least one elastomer, a concave-convex structure on the base assembly engages with a concave-convex structure on the elastomer to fix the rotator assembly and the base assembly.

Further, the base assembly includes a base and a sleeve; and the sleeve is riveted or integrated onto the base, the sleeve and the base are hollow, the hollow part of the sleeve is connected to the hollow part of the base, and the rotator assembly is sheathed to the sleeve.

The rotator assembly may include a support and a rotator; the support and the rotator are sheathed to the sleeve, the at least one elastomer is set on the support, and a concave-convex structure on the sleeve engages with a concave-convex structure on the elastomer.

The rotator assembly further includes a roller; the roller reaches and contacts the support or rotator, the roller also reaches and contacts the base, and the roller props up between the support and the base, or between the rotator and the base.

The concave-convex structure may take on these features: At least one concave hole is set in the base assembly, and at least one convex point is set on the elastomer accordingly; or at least one convex point is set on the base assembly, and at least one concave hole is set in the elastomer accordingly; or at least one convex point and at least one concave hole are set on the base assembly, and at least one concave hole and at least one convex point are set on the elastomer accordingly.

At least one machine hole is set in the base assembly, and at least one machine hole is set in the rotator assembly.

The base assembly, the rotator assembly, and the riveting gasket take on the shape of a circular plate or a cylinder.

An electronic device provided in this invention includes the foregoing rotating mechanism, a body of the electronic device, and a data interface.

The data interface is connected to the rotator assembly through the machine hole, and the body of the electronic device is connected to the base assembly through the machine hole; or the data interface is connected to the base assembly through the machine hole, and the body of the electronic device is connected to the rotator assembly through the machine hole; the body of the electronic device includes a shell and a circuit board, where the circuit board is set inside the space enclosed by the shell; the data interface is electrically connected to the circuit board, and the circuit board transmits data through the data interface; and the data interface is rotatable against the body of the electronic device through the rotating mechanism.

Further, the electronic device is a data card; a communication function module is set on the circuit board, and is configured to access a wireless communication network; and the data interface is a Universal Serial Bus (USB) interface.

In the rotating mechanism and the electronic device disclosed herein, total axial thickness of the rotating mechanism is very small, the outer diameter of the rotating mechanism is very small, and therefore, the rotating mechanism fits in well with an ultra-thin electronic device.

### BRIEF DESCRIPTION OF THE DRAWINGS

FIG. 1 is a disassembled structure diagram of a rotating mechanism according to a first embodiment of the invention;
FIG. 2 is another disassembled structure diagram of a rotating mechanism according to the first embodiment of the invention;
FIG. 3a shows an assembled rotating mechanism according to the first embodiment of the invention;
FIG. 3b is a sectional structure diagram of an assembled rotating mechanism according to the first embodiment of the invention;
FIG. 4a is a disassembled structure diagram of a rotating mechanism according to a second embodiment of the invention;
FIG. 4b is a structure diagram of an elastomer in the rotating mechanism according to the second embodiment of the invention;
FIG. 5 is a front structure diagram of an electronic device according to a third embodiment of the invention;
FIG 6 is a back structure diagram of an electronic device according to the third embodiment of the invention;
FIG. 7a is a disassembled structure diagram of another rotating mechanism according to the second embodiment of the invention;
FIG. 7b is a main topology of a sleeve in another rotating mechanism according to the second embodiment of the invention;
FIG. 7c is a left view of a sleeve in another rotating mechanism according to the second embodiment of the invention; and
FIG. 7d is a top view of a sleeve in another rotating mechanism according to the second embodiment of the invention.

### DETAILED DESCRIPTION OF THE EMBODIMENTS

The technical solution of the invention is expounded below with reference to accompanying drawings and embodiments.

A rotating mechanism provided in this invention includes a base assembly, a rotator assembly, and a riveting gasket. The base assembly is riveted to the riveting gasket, the rotator assembly is sheathed to the base assembly, the riveting gasket restricts the rotator assembly onto the base assembly, and the rotator assembly can rotate against the base assembly around an axial direction (namely, around a direction vertical to the base assembly and the rotator assembly). The rotator assembly includes at least one elastomer, a concave-convex structure on the base assembly engages with a concave-convex structure on the elastomer to fix the rotator assembly and the base assembly.

In the rotating mechanism provided in this invention, the rotator assembly can rotate against the base assembly. The rotator assembly is sheathed to the base assembly, which saves axial space. That is, the rotating mechanism is very thin, and fits in well with ultra-thin data cards.

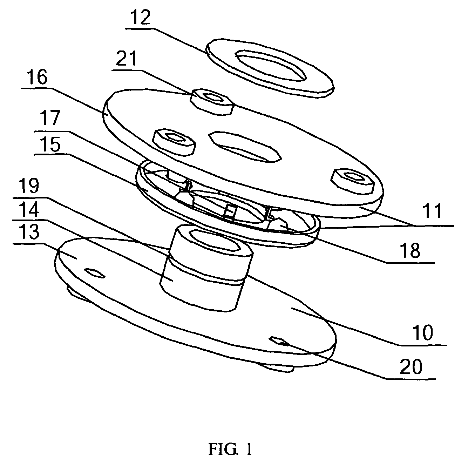

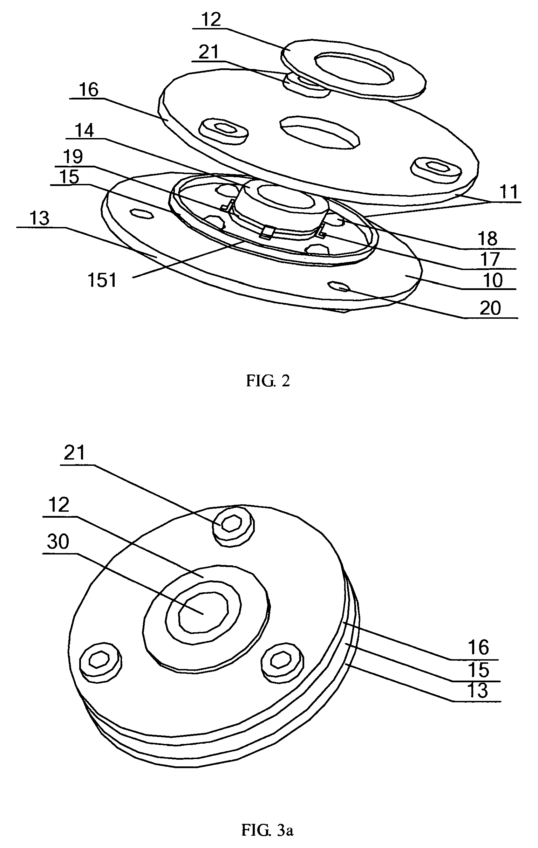

FIG. 1 is a disassembled structure diagram of a rotating mechanism according to a first embodiment of the invention, and FIG. 2 is another disassembled structure diagram of a rotating mechanism according to the first embodiment of the invention.

As shown in FIG 1 and FIG 2, the rotating mechanism includes: a base assembly 10, a rotator assembly 11, and a riveting gasket 12. The base assembly 10 is riveted to the riveting gasket 12, and the rotator assembly 11 is sheathed to the base assembly 10. The riveting gasket 12 restricts the rotator assembly 11 onto the base assembly 10, and the rotator assembly 11 rotates against the base assembly 10 around an axial direction. As shown in FIG. 1, after the rotator assembly 11 is sheathed to the base assembly 10, the riveting gasket 12 is riveted to the base assembly 10. In this way, the rotator assembly 11 is restricted between the riveting gasket 12 and the base assembly 10 so that the rotator assembly 11 does not leave the base assembly 10 when the rotator assembly 11 rotates against the base assembly 10.

The base assembly 10, the rotator assembly 11, and the riveting gasket 12 take on the shape of a circular plate or a cylinder, namely, their cross sections are circular. Nevertheless, they may take on other shapes, for example, cylinder or plate whose cross section is a regular polygon, or cylinder or plate whose cross section is an irregular polygon, or cylinder or plate whose cross section is an ellipse.

Further, the base assembly 10 includes a base 13 and a sleeve 14. The sleeve 14 can be riveted to the base 13, or integrated into the base 13. The sleeve 14 and the base 13 may be hollow, the hollow part of the sleeve 14 is connected to the hollow part of the base 13 to form a central hole, and the circuit connection cable can get through the central hole. The rotator assembly 11 may also be hollow, and the sleeve 14 gets through the hollow part of the rotator assembly 11 to let the rotator assembly 11 be sheathed to the sleeve 14.

In this embodiment, the rotator assembly 11 includes at least one elastomer 17, a concave-convex structure on the base assembly 10 engages with a concave-convex structure on the elastomer 17 to fix the rotator assembly 11 and the base assembly 10. Specifically, at least one concave hole is set in the base assembly 10, and at least one convex point is set on the elastomer 17 accordingly. Alternatively, at least one convex point is set on the base assembly 10, and at least one concave hole is set in the elastomer 17 accordingly; or at least one convex point and at least one concave hole are set on the base assembly 10, and at least one concave hole and at least one convex point are set on the elastomer 17 accordingly.

Specifically, the rotator assembly 11 may further include a support 15 and a rotator 16. The support 15 and the rotator 16 are sheathed to the sleeve 14. FIG. 2 shows how the support 15 is sheathed to the sleeve 14. The elastomer 17 is fixed onto the support 15.

At least one roller is set between the support 15 and the rotator 16, and the roller may be a ball 18. As shown in FIG. 1, the support 15 may be a plate structure, the ball 18 is located in the plate structure, and the ball 18 contacts the base 13 so that the rotator assembly rotates against the base assembly more flexibly.

In this embodiment, the concave-convex structure on the sleeve 14 fits in with the concave-convex structure on the elastomer 17, as described below:
A concave slot 19 is set around the outer circumference of the sleeve 14, and at least one concave hole (not illustrated in the figure) is set in the concave slot 19. The at least one concave hole may be distributed evenly on a circle of the concave slot. Accordingly, at least one convex point (not illustrated in the figure) is set on the at least one elastomer 17 on the support 15, where the at least one convex point engages with the concave hole in the concave slot 19. The number of convex points is the same as the number of concave holes, and the convex points are also distributed on a circle evenly. As shown in FIG. 2, after the support 15 is sheathed to the sleeve 14, the position of the convex point on the elastomer 17 corresponds to the position of the concave slot 19 exactly. Therefore, in the rotation process, the concave hole in the concave slot 19 engages with the convex point on the elastomer 17 to generate the angle of rotation level and the sense of handling. For example, if the number of concave holes is 4, which is equal to the number of convex points, the action of rotating for every 90° reaches a new level of rotation. The elastomer 17 is elastic to some extent. When the concave holes engage with the convex points, the elastomer 17 presses the convex points on the elastomer into the concave holes. In this way, the sleeve 14 is fixed onto the support 15 relatively, and the rotator assembly is fixed onto the base assembly. When inverse torque is applied to the rotator assembly and the base assembly, the elastomer 17 may generate elastic deformation, and the convex points can come out of the concave holes under a proper torque force so that the rotator assembly rotates against the base assembly. Because the rotation level of the rotation mechanism can be set flexibly as required, the rotation may stop every time when the rotation reaches a specific angle, which increases the flexibility and convenience of using the device.

The foregoing concave-convex structure is only an example of this invention. Alternatively, at least one convex point is set on the concave slot 19, and at least one concave hole that engages with the convex point is set in the at least one elastomer 17; or at least one convex point and at least one concave hole are set on the concave slot 19, and at least one concave hole that engages with the convex point and at least one convex point that engages with the concave hole are set on the at least one elastomer 17.

In this embodiment, at least one machine hole 20 is set in the base 13, and at least one machine hole 21 is set in the rotator 16. The machine holes are designed to fix the rotating mechanism onto the corresponding electronic device or component. The machine holes may be through-holes or blind holes set in the base 13 and the rotator 16.

The assembly process of the rotating mechanism shown in FIG. 1 is: Rivet the sleeve 14 to the base 13 to form the base assembly 10; fasten the at least one elastomer 17 to the corresponding position of the support 15, sheathe the support 15 to the sleeve 14, and let the convex points of the elastomer 17 of the support 15 be embedded into the concave slot 19 of the sleeve 14 exactly; load the at least one ball 18 onto the support 15, and sheathe the rotator 16 to the sleeve 14; install the riveting gasket 12, and rivet the riveting gasket 12, the rotator 16, the support 15, and the base assembly 10 together. Besides, when the rotator assembly 11 rotates against the base assembly 10, the rotator 16 keeps fixed to the support 15 relatively. For example, the rotator 16 may be fastened to the support 15 through weld, rivet, or bolts. Alternatively, a fixing slot (not illustrated in the figure) may be set on the rotator 16. The fixing slot corresponds to the edge 151 of the support 15, and the edge 151 of the support 15 is embedded into the fixing slot of the rotator 16 so that the rotator 16 is fastened to the support 15.

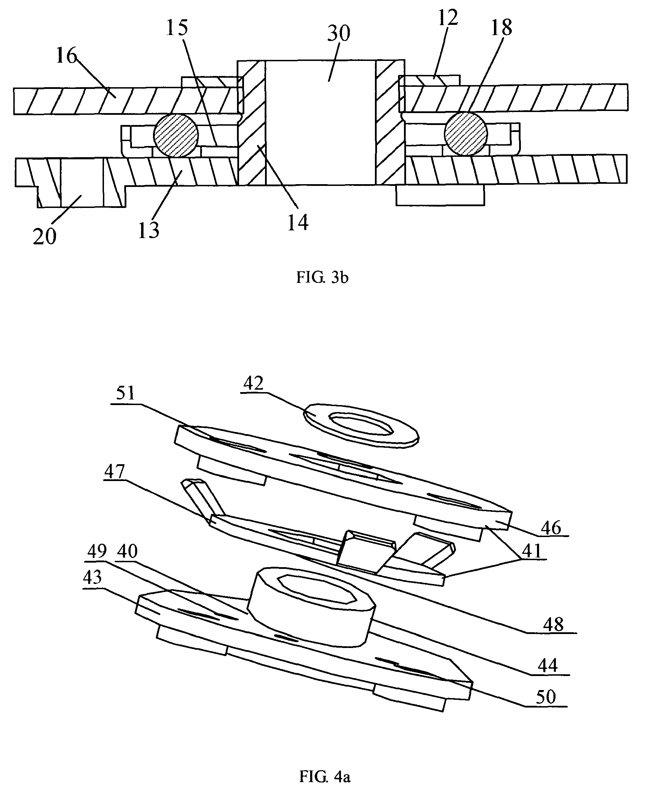

FIG. 3a is a structure diagram of an assembled rotating mechanism according to the first embodiment of the invention, and FIG. 3b is a sectional structure diagram of an assembled rotating mechanism according to the first embodiment of the invention. Specifically, FIG. 3b is an axial sectional diagram of the rotating mechanism shown in FIG. 3a. As shown in FIG. 3a and FIG. 3b, the support 15 may be a plate structure, a through-hole may be set in the support 15, the ball 18 is located in the through-hole, and the ball 18 contacts both the base 13 and the rotator 16. In this way, when the rotator assembly rotates against the base assembly, the ball 18 props up between the base 13 and the rotator 16, and the rotation of the rotator assembly against the base assembly is more flexible. The diameter of the ball 18 may be 0.5-0.8 mm, and the total axial thickness of the rotating mechanism is 2 mm or smaller, and the outer diameter of the rotating mechanism is 10 mm or smaller, and therefore, the rotating mechanism fits in well with an ultra-thin electronic device. The rotating mechanism shown in FIG. 3a has a central hole 30, and a cable may get through the central hole. For example, the USB connection cable may get through the central hole 30 of the rotating mechanism to get connected to a Printed Circuit Board (PCB) at the bottom. It should be noted that the holes in the support 15 may have a blind hole or recess. In this case, the ball 18 is set in the blind hole or recess, the ball 18 reaches and contacts the support 15 and the base 13. Therefore, when the rotator assembly rotates against the base assembly, the roller 18 props up between the base 13 and the support 15. Nevertheless, the ball 18 is only an embodiment of the roller. In practice, any variation of the roller is appropriate so long as the roll of the roller relieves relative resistance between the rotator assembly and the base assembly and improves flexibility of relative rotation between the rotator assembly and the base assembly. For example, the roller may be a rolling rod. The rolling rod may be embedded into the support 15 or rotator 16 through an axle or by other means, and the rolling rod contacts the base 13. Therefore, when the rotator assembly rotates against the base assembly, the rolling rod props up between the base 13 and the support 15 or rotator 16.

FIG. 4a is a disassembled structure diagram of a rotating mechanism according to a second embodiment of the invention. As shown in FIG. 4a, the rotating mechanism includes: a base assembly 40, a rotator assembly 41, and a riveting gasket 42. The base assembly 40 is riveted to the riveting gasket 42, and the rotator assembly 41 is sheathed to the base assembly 40. The riveting gasket 42 restricts the rotator assembly 41 onto the base assembly 10, and the rotator assembly 41 rotates against the base assembly 40 around an axial direction. As shown in FIG. 4a, after the rotator assembly 41 is sheathed to the base assembly 40, the riveting gasket 42 is riveted to the base assembly 40. In this way, the rotator assembly 41 is restricted between the riveting gasket 42 and the base assembly 40, and the rotator assembly 41 does not leave the base assembly 40 when the rotator assembly 41 rotates against the base assembly 40.

The base assembly 40, the rotator assembly 41, and the riveting gasket 42 take on the shape of a circular plate or a cylinder, namely, their cross sections are circular. Nevertheless, they may take on other shapes, for example, cylinder or plate whose cross section is a regular polygon, or cylinder or plate whose cross section is an irregular polygon, or cylinder or plate whose cross section is an ellipse.

Further, the base assembly 40 includes a base 43 and a sleeve 44. The sleeve 44 may be riveted to the base 43, or integrated into the base 43. The sleeve 44 and the base 43 may be hollow, the hollow part of the sleeve 44 is connected to the hollow part of the base 43 to form a central hole, and the circuit connection cable can get through the central hole. The rotator assembly 41 is sheathed to the sleeve 44. That is, the rotator assembly 41 is hollow, and the sleeve 44 gets through the hollow part of the rotator assembly 41.

In this embodiment, the rotator assembly 41 includes an elastomer 47, a concave-convex structure on the base assembly 40 engages with a concave-convex structure on the elastomer 47 to fix the rotator assembly 41 and the base assembly 40. Specifically, at least one concave hole is set in the base assembly 40, and at least one convex point is set on the elastomer 47 accordingly. Alternatively, at least one convex point is set on the base assembly 40, and at least one concave hole is set in the elastomer 47 accordingly; or at least one convex point and at least one concave hole are set on the base assembly 40, and at least one concave hole and at least one convex point are set on the elastomer 47 accordingly.

Specifically, the rotator assembly 41 may further include a rotator 46. As shown in FIG. 4a, the elastomer 47 and the rotator 46 are sheathed to the sleeve 44. One plane of the elastomer 47 contacts the base 43, and the other plane of the elastomer 47 contacts the rotator 46. In this way, the elastomer 47 can reach and contact both the rotator 46 and the base 43.

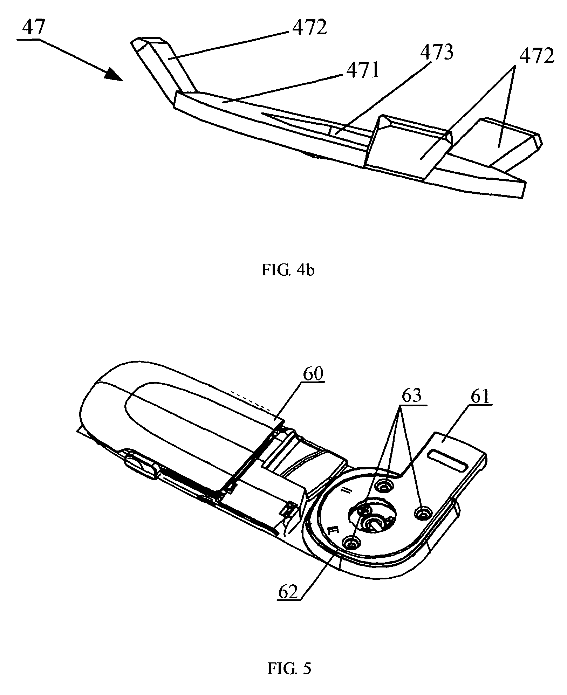

FIG. 4b is a structure diagram of an elastomer in the rotating mechanism according to the second embodiment of the invention. As shown in FIG. 4b, the elastomer 47 is a component composed of one support part 471 and multiple elastic parts 472. The angle between the elastic part 472 and the plane of the support part 471 is an obtuse angle, and the elastic parts 472 are designed to keep an axial distance between the support 471 and the rotator 46. The elastic part 472 may be an elastic metal plate. While in service, more than two elastic parts 472 are set on the support part 471. One plane of the support part 471 contacts the base 43, and a concave-convex structure is set on the contact plane of the support part 471 which contacts the base 43. The elastic part 472 contacts the rotator 46. Because the elastic part 472 makes the elastomer 47 elastic, the axial distance between the elastomer 47 and the rotator 46 varies with the elasticity of the elastomer 47.

In this embodiment, the concave-convex structure on the base 43 fits in with the concave-convex structure on the elastomer 47, as described below:
At least one convex point 48 is set on the plane of the elastomer 47 against the base 43 (namely, the contact plane of the support part 471 of the elastomer 47 which contacts the base 43), and at least one concave hole 49 that engages with the concave point 48 is set in the plane of the base 43 against the elastomer 47. Specifically, the number of convex points 48 is the same as the number of concave holes 49, and the convex points and the concave holes 49 may be distributed on a circle evenly. A through-hole 473 exists in the middle of the support part 471 of the elastomer 47. The elastomer 47 is sheathed to the sleeve 44 through the through-hole 473. Afterward, in the rotation process, the concave hole 49 engages with the convex point 48 to generate the angle of the rotation level and the sense of handling. For example, if the number of concave holes 49 is 4, which is equal to the number of convex points 48, the action of rotating for every 90° reaches a new level of rotation. The elastomer 47 is elastic to some extent. When the concave holes 49 engage with the convex points 48, a proper force may be applied to rotate the convex points 48 out of the concave holes 49. Specifically, when the concave holes 49 engages with the convex points 48, the elastic part 472 of the elastomer 47 reaches and contacts the rotator 46, and the elastomer 47 presses the convex points on the support part 471 into the concave holes of the base 43. In this way, the sleeve 44 is fixed onto the elastomer 47 relatively, and the rotator assembly is fixed onto the base assembly. When inverse torque is applied to the rotator assembly and the base assembly, the elastomer 47 may generate elastic deformation, and the convex points 48 can come out of the concave holes 49 under a proper torque force so that the rotator assembly rotates against the base assembly.

The foregoing concave-convex structure is only an example of this invention. Alternatively, at least one convex point is set on the base 43, and at least one concave hole that engages with the convex point is set in the elastomer 47; or at least one convex point and at least one concave hole are set on the base 43, and at least one concave hole that engages with the convex point and at least one convex point that engages with the concave hole are set on the elastomer 47. Besides, the support part 471 may be a circular rod or plate shown in FIG. 4a and FIG. 4b; or, the support part 471 may take on other shapes, for example, cylinder or plate whose cross section is a regular polygon, or cylinder or plate whose cross section is an irregular polygon, or cylinder or plate whose cross section is an ellipse. All such shapes are appropriate so long as a through-hole 473 is set in the middle of the rod or plate of such shapes.

In this embodiment, at least one machine hole 50 is set in the base 43, and at least one machine hole 51 is set in the rotator 46. The machine holes are designed to fix the rotating mechanism onto the corresponding electronic device or component. The machine holes may be through-holes or blind holes set in the base 43 and the rotator 46.

The assembly process of the rotating mechanism shown in FIG 4a is: Rivet the sleeve 44 to the base 43 to form a base assembly 40; sheathe the elastomer 47 to the sleeve 44, and the elastomer 47 contacts the base 43; sheathe the rotator 46 to the sleeve 44; install the riveting gasket 42, and rivet the riveting gasket 42, rotator 46, elastomer 47, and base assembly 40 together. Besides, when the rotator assembly 41 rotates against the base assembly 40, the rotator 46 keeps fixed to the elastomer 47 relatively. For example, the rotator 46 may be fastened to the elastomer 47 through weld, rivet, or bolts. Alternatively, a fixing slot (not illustrated in the figure) may be set on the rotator 46. The fixing slot corresponds to the elastic part 472 of the elastomer 47, and the elastic part 472 of the elastomer 47 is embedded into the fixing slot of the rotator 46 so that the rotator 46 is fastened to the elastomer 47.

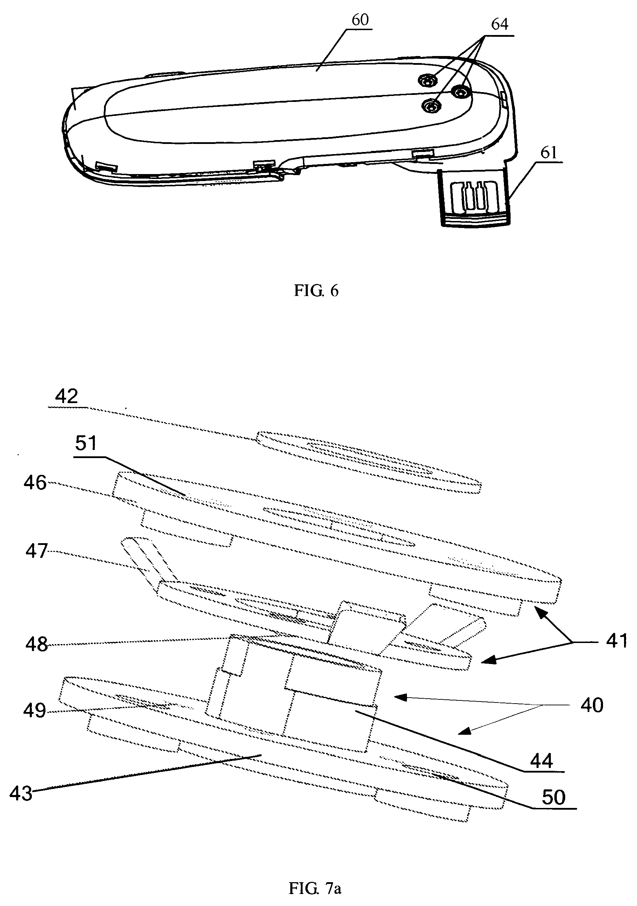

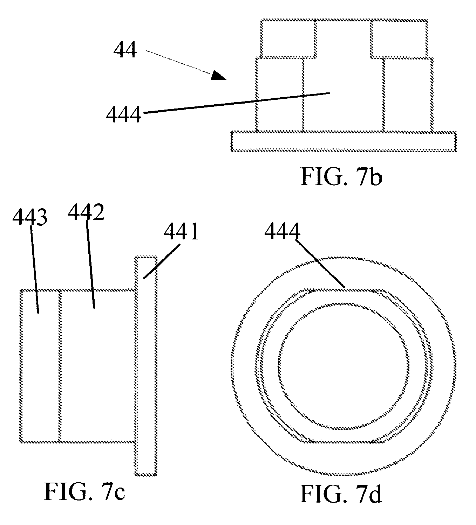

The rotator 46 may also be relatively fixed to the elastomer 47 by other means. See FIG. 7a to FIG. 7d. FIG. 7a is a disassembled structure diagram of another rotating mechanism according to the second embodiment of the invention; FIG. 7b is a main topology of a sleeve in another rotating mechanism according to the second embodiment of the invention; FIG. 7c is a left view of a sleeve in another rotating mechanism according to the second embodiment of the invention; and FIG. 7d is a top view of a sleeve in another rotating mechanism according to the second embodiment of the invention. The sleeve 44 may not be fixed to the base 43, and the sleeve 44 includes a restricting part 441, a cylindrical part 442, and a riveting part 443. The cylindrical part 442 gets through the circular through-hole in the middle of the base 43; the elastomer 47 and the rotator 46 are sheathed to the cylindrical part 442, and the riveting gasket 42 is riveted to the riveting part 443. Because an area of the restricting part 441 is greater than an area of the circular through-hole of the base 43 (the restricting part 441 is located on a side of the sleeve 44 that contacts the base 43. The area enclosed by the edge of the restricting part 441 is greater than the area of the circular through-hole in the middle of the base 43). Therefore, the restricting part 441 and the riveting part 443 restrict the base 43, elastomer 47, and rotator 46 together. A cutting plane 444 is set on the sleeve 44. That is, one or more columns whose bottom is a bow shape are cut along the axis of the cylindrical part 442, and therefore, the cross section of the cylindrical part 442 is an incomplete circle. The elastomer 47 and the through-hole in the middle of the rotator 46 are set according to the cross section of the cylindrical part 442, and therefore, the elastomer 47 and the through-hole in the middle of the rotator 46 also form an incomplete circle. In this way, the elastomer 47, the rotator 46, and the cylindrical part 442 are clasped to each other; when the rotator assembly 41 rotates against the base assembly 40, the rotator 46 keeps fixed to the elastomer 47 relatively, and the base 43 can rotate around the sleeve 44.

The total axial thickness of the rotating mechanism in this embodiment is 2 mm or smaller, and the outer diameter of the rotating mechanism is 10 mm or smaller, and therefore, the rotating mechanism fits in well with an ultra-thin electronic device. The rotating mechanism has a central hole, and a cable may get through the central hole. For example, a USB connection cable may get through the central hole of the rotating mechanism to get connected to a Printed Circuit Board (PCB) at the bottom. Because the rotation level of the rotation mechanism can be set flexibly as required, the rotation may stop every time when the rotation reaches a specific angle, which increases the flexibility and convenience.

FIG. 5 is a front structure diagram of an electronic device according to a third embodiment of the invention, and FIG 6 is a back structure diagram of an electronic device according to the third embodiment of the invention. As shown in FIG. 5 and FIG 6, the electronic device includes a body 60 of the electronic device, a data interface 61, and a rotating mechanism 62. The rotating mechanism 62 may be any rotating mechanism provided in the first embodiment and the second embodiment above.

In this embodiment, the data interface 61 is connected to the rotator assembly, and the body 60 of the electronic device is connected to the base assembly. Specifically, through a machine hole in the rotator assembly, a machine screw 63 fastens the rotator assembly to the data interface 61, as shown in FIG. 5; through a machine hole in the base assembly, a machine screw 64 fastens the base assembly to the body 60 of the electronic device, as shown in FIG. 6. When the data interface 61 is flipped, the rotator assembly rotates axially, and the data interface is connected to the body of the electronic device in a rotatable mode.

The electronic device shown in FIG. 5 and FIG. 6 is an example of electronic devices provided in this invention. However, being not limited to the example, the data interface 61 in this invention may be connected to the base assembly through a machine hole, and the body 60 of the electronic device may be connected to the rotator assembly through a machine hole.

The body 60 of the electronic device includes a shell and a circuit board. The circuit board is set inside the space enclosed by the shell. The data interface 61 is electrically connected to the circuit board, and the circuit board transmits data through the data interface 61. The data interface 61 can rotate against the body 60 of the electronic device through the rotating mechanism.

Besides, the electronic device may be a data card (a wireless modem), a wireless network adaptor, and a USB disk. The foregoing data interface may be a USB interface. This embodiment is applicable to various devices with a USB interface, especially, to a wireless communication device with a USB interface. For example, the USB interface device provided in this invention is applicable to various terminal devices. The terminal devices may be fixed terminals or mobile terminals with a USB interface, for example, a data card or a mobile phone with a USB interface. Besides, the device is also applicable to various mobile devices and portable devices with a USB interface, for example, an MP3 player and an MP4 player with a USB interface, a PlayStation Portable (PSP), a digital camera, and a USB disk.

When the foregoing electronic device is a data card (a wireless modem), the circuit board includes a communication function module. The communication function module is set on the circuit board, and is configured to communicate with the wireless network. In this way, the wireless modem transmits data through the wireless network. Specifically, assuming that the data interface 61 is a USB interface, the USB interface in the wireless modem is connected to the USB receptacle in a device such as a computer. The device such as a computer communicates and exchanges data with the wireless network through the communication function module on the circuit board.

Finally, it should be noted that the above embodiments are merely provided for describing the technical solutions of the invention, but not intended to limit the invention. It is apparent that persons skilled in the art can make various modifications and variations to the invention without departing from the scope of the invention. The invention is intended to cover the modifications and variations provided that they fall in the scope of protection defined by the appended claims.

## Claims

1. A rotating mechanism (62), comprising a base assembly (10; 40), a rotator assembly (11; 41), and a riveting gasket (12; 42), **characterized in that**:
the base assembly (10; 40) is riveted to the riveting gasket (12; 42); the rotator assembly (11; 41) is sheathed to the base assembly (10; 40), the riveting gasket (12; 42) restricts the rotator assembly (11; 41) onto the base assembly (10; 40), and the rotator assembly (11; 41) is rotatable against the base assembly (10; 40) around an axial direction; and
the rotator assembly (11; 41) includes at least one elastomer (17; 47), a concave-convex structure on the base assembly (10; 40) engages with a concave-convex structure on the elastomer (17; 47) to fix the rotator assembly (11; 41) and the base assembly (10; 40),
wherein: the base assembly (10; 40) comprises a base (13; 43) and a sleeve (14; 44); and the sleeve (14; 44) is riveted or integrated onto the base (13; 43), the sleeve (14; 44) and the base (13; 43) are hollow, the hollow part of the sleeve (14; 44) is connected to the hollow part of the base (13; 43), and the rotator assembly (11; 41) is sheathed to the sleeve (14; 44),
wherein: the rotator assembly (11) further comprises a support (15) and a rotator (16); and the support (15) and the rotator (16) are sheathed to the sleeve (14), the at least one elastomer (17) is set on the support, and a concave-convex structure on the sleeve (14) engages with a concave-convex structure on the elastomer (17),
wherein: the rotator assembly (11) further comprises a roller (18); and the roller (18) reaches and contacts the support (15) or the rotator (16), the roller (18) also reaches and contacts the base (13), and the roller (18) props up between the support (15) and the base (13), or between the rotator (16) and the base (13).

2. The rotating mechanism (62) according to claim 1, wherein the concave-convex structure comprises:
at least one concave hole is set in the base assembly (10; 40), and at least one convex point is set on the elastomer (17; 47) accordingly; or
at least one convex point is set on the base assembly (10; 40), and at least one concave hole is set in the elastomer (17; 47) accordingly; or
at least one convex point and at least one concave hole are set on the base assembly (10; 40), and at least one concave hole and at least one convex point are set on the elastomer (17; 47) accordingly.

3. The rotating mechanism (62) according to claim 1, wherein:
at least one machine hole is set in the base assembly (10; 40), and at least one machine hole is set in the rotator assembly (11; 41).

4. The rotating mechanism (62) according to claim 1, wherein:
the base assembly (10; 40), the rotator assembly (11; 41), and the riveting gasket (12; 42) take on a shape of a circular plate or cylinder.

5. An electronic device, **characterized in that**
the electronic device comprises a rotating mechanism (62) specified in any one of claims 1-4, a body (60) of the electronic device, and a data interface (61);
the data interface (61) is connected to the rotator assembly (62) through a machine hole, and the body (60) of the electronic device is connected to the base assembly (10; 40) through a machine hole; or the data interface (61) is connected to the base assembly (10; 40) through a machine hole, and the body (60) of the electronic device is connected to the rotator assembly (11; 41) through a machine hole;
the body (60) of the electronic device comprises a shell and a circuit board, wherein the circuit board is set inside space enclosed by the shell;
the data interface (61) is electrically connected to the circuit board, and the circuit board transmits data through the data interface (61); and
the data interface (61) is rotatable against the body (60) of the electronic device through the rotating mechanism.

6. The electronic device according to claim 5, wherein:
the electronic device is a data card; a communication function module is set on the circuit board, and is configured to access a wireless communication network; and the data interface (61) is a Universal Serial Bus, USB, interface.

## Patentansprüche

1. Drehmechanismus (62), der eine Basisanordnung (10; 40), eine Rotatoranordnung (11; 41) und einen Vernietungsdichtring (12; 42) umfasst, **dadurch gekennzeichnet, dass**:
die Basisanordnung (10; 40) an den Vernietungsdichtring (12; 42) genietet wird; die Rotatoranordnung (11; 41) über die Basisanordnung (10; 40) gezogen wird, wobei der Vernietungsdichtring (12; 42) die Rotatoranordnung (11; 41) auf die Basisanordnung (10; 40) begrenzt und die Rotatoranordnung (11; 41) gegen die Basisanordnung (10; 40) um eine Achsrichtung drehbar ist; und
die Rotatoranordnung (11; 41) mindestens ein Elastomer (17; 47) beinhaltet, wobei eine konkav-konvexe Struktur auf der Basisanordnung (10; 40) und eine konkav-konvexe Struktur auf dem Elastomer (17; 47) ineinandergreifen, um die Rotatoranordnung (11; 41) und die Basisanordnung (10; 40) zu befestigen,
wobei: die Basisanordnung (10; 40) eine Basis (13; 43) und eine Manschette (14; 44) umfasst und die Manschette (14; 44) auf die Basis (13; 43) genietet oder mit dieser integriert wird, wobei die Manschette (14; 44) und die Basis (13; 43) hohl sind, wobei der hohle Teil der Manschette (14; 44) mit dem hohlen Teil der Basis (13; 43) verbunden wird, und die Rotatoranordnung (11; 41) über die Manschette (14; 44) gezogen wird,
wobei: die Rotatoranordnung (11) weiterhin eine Stütze (15) und einen Rotator (16) umfasst und die Stütze (15) und der Rotator (16) über die Manschette (14) gezogen werden, wobei das mindestens eine Elastomer (17) auf der Stütze platziert wird und eine konkav-konvexe Struktur auf der Manschette (14) und eine konkav-konvexe Struktur auf dem Elastomer (17) ineinandergreifen,
wobei: die Rotatoranordnung (11) weiterhin eine Rolle (18) umfasst und die Rolle (18) die Stütze (15) oder den Rotator (16) erreicht und berührt, wobei die Rolle (18) außerdem die Basis (13) erreicht und berührt und die Rolle (18) zwischen der Stütze (15) und der Basis (13) oder zwischen dem Rotator (16) und der Basis (13) abstützt.

2. Drehmechanismus (62) nach Anspruch 1, wobei die konkav-konvexe Struktur Folgendes umfasst:
mindestens ein konkaves Loch ist in der Basisanordnung (10; 40) platziert und mindestens eine konvexe Spitze ist dementsprechend auf dem Elastomer (17; 47) platziert; oder
mindestens eine konvexe Spitze ist auf der Basisanordnung (10; 40) platziert und mindestens ein konkaves Loch ist dementsprechend in dem Elastomer (17; 47) platziert; oder
mindestens eine konvexe Spitze und mindestens ein konkaves Loch sind auf der Basisanordnung (10; 40) platziert und mindestens ein konkaves Loch und mindestens eine konvexe Spitze sind dementsprechend auf dem Elastomer (17; 47) platziert.

3. Drehmechanismus (62) nach Anspruch 1, wobei:
mindestens ein Maschinenloch in der Basisanordnung (10; 40) platziert ist und mindestens ein Maschinenloch in der Rotatoranordnung (11; 41) platziert ist.

4. Drehmechanismus (62) nach Anspruch 1, wobei:
die Basisanordnung (10; 40), die Rotatoranordnung (11; 41) und der Vemietungsdichtring (12; 42) eine Form einer kreisförmigen Platte oder eines Zylinders annehmen.

5. Elektronische Vorrichtung, **dadurch gekennzeichnet, dass**:
die elektronische Vorrichtung einen in einem der Ansprüche 1-4 definierten Drehmechanismus (62), ein Gehäuse (60) der elektronischen Vorrichtung und eine Datenschnittstelle (61) umfasst;
die Datenschnittstelle (61) mit der Rotatoranordnung (62) durch ein Maschinenloch verbunden ist und das Gehäuse (60) der elektronischen Vorrichtung mit der Basisanordnung (10; 40) durch ein Maschinenloch verbunden ist; oder die Datenschnittstelle (61) mit der Basisanordnung (10; 40) durch ein Maschinenloch verbunden ist und das Gehäuse (60) der elektronischen Vorrichtung mit der Rotatoranordnung (11; 41) durch ein Maschinenloch verbunden ist;
das Gehäuse (60) der elektronischen Vorrichtung eine Schale und eine Platine umfasst, wobei die Platine in einem Raum platziert ist, der von der Schale umschlossen wird;
die Datenschnittstelle (61) mit der Platine elektrisch verbunden ist und die Platine Daten durch die Datenschnittstelle (61) überträgt und
die Datenschnittstelle (61) gegen das Gehäuse (60) der elektronischen Vorrichtung durch den Drehmechanismus drehbar ist.

6. Elektronische Vorrichtung nach Anspruch 5, wobei:
die elektronische Vorrichtung eine Datenkarte ist; ein Kommunikationsfunktionsmodul auf der Platine platziert ist und dazu konfiguriert ist, auf ein drahtloses Kommunikationsnetz zuzugreifen; und die Datenschnittstelle (61) eine universelle serielle Bus-Schnittstelle (USB-Schnittstelle) ist.

## Revendications

1. Mécanisme rotatif (62), comportant un ensemble (10 ; 40) d'embase, un ensemble (11 ; 41) de rotateur, et une garniture (12 ; 42) à riveter, **caractérisé en ce que** :
l'ensemble (10 ; 40) d'embase est riveté à la garniture (12 ; 42) à riveter ; l'ensemble (11 ; 41) de rotateur est emboîté avec l'ensemble (10 ; 40) d'embase, la garniture (12 ; 42) à riveter retient l'ensemble (11 ; 41) de rotateur sur l'ensemble (10 ; 40) d'embase, et l'ensemble (11 ; 41) de rotateur peut pivoter par rapport à l'ensemble (10 ; 40) d'embase autour d'une direction axiale ; et
l'ensemble (11 ; 41) de rotateur comprend au moins un élastomère (17 ; 47), une structure concave-convexe sur l'ensemble (10 ; 40) d'embase interagit avec une structure concave-convexe sur l'élastomère (17 ; 47) pour fixer l'ensemble (11 ; 41) de rotateur et l'ensemble (10 ; 40) d'embase,
l'ensemble (10 ; 40) d'embase comportant une embase (13 ; 43) et un manchon (14 ; 44) ; et le manchon (14 ; 44) étant riveté ou intégré sur l'embase (13 ; 43), le manchon (14 ; 44) et l'embase (13 ; 43) étant creux, la partie creuse du manchon (14 ; 44) étant reliée à la partie creuse de l'embase (13 ; 43), et l'ensemble (11 ; 41) de rotateur étant emboîté avec le manchon (14 ; 44),
l'ensemble (11) de rotateur comportant en outre un support (15) et un rotateur (16) ; et le support (15) et le rotateur (16) étant emboîtés avec le manchon (14), l'élastomère ou les élastomères (17) étant placé(s) sur le support, et une structure concave-convexe sur le manchon (14) interagissant avec une structure concave-convexe sur l'élastomère (17),
l'ensemble (11) de rotateur comportant en outre un galet (18) ; et le galet (18) atteignant et touchant le support (15) ou le rotateur (16), le galet (18) atteignant et touchant également l'embase (13), et le galet (18) prenant appui entre le support (15) et l'embase (13), ou entre le rotateur (16) et l'embase (13).

2. Mécanisme rotatif (62) selon la revendication 1, la structure concave-convexe étant **caractérisée en ce que** :
au moins un trou concave est pratiqué dans l'ensemble (10 ; 40) d'embase, et au moins un point convexe est réalisé sur l'élastomère (17 ; 47) en concordance ; ou
au moins un point convexe est réalisé sur l'ensemble (10 ; 40) d'embase, et au moins un trou concave est pratiqué dans l'élastomère (17 ; 47) en concordance ; ou
au moins un point convexe et au moins un trou concave sont réalisés sur l'ensemble (10 ; 40) d'embase, et au moins un trou concave et au moins un point convexe sont réalisés sur l'élastomère (17 ; 47) en concordance.

3. Mécanisme rotatif (62) selon la revendication 1 :
au moins un trou de machine étant pratiqué dans l'ensemble (10 ; 40) d'embase, et au moins un trou de machine étant pratiqué dans l'ensemble (11 ; 41) de rotateur.

4. Mécanisme rotatif (62) selon la revendication 1 :
l'ensemble (10 ; 40) d'embase, l'ensemble (11 ; 41) de rotateur et la garniture (12 ; 42) à riveter prenant la forme d'une plaque circulaire ou d'un cylindre.

5. Dispositif électronique, **caractérisé en ce que**
le dispositif électronique comporte un mécanisme rotatif (62) spécifié dans l'une quelconque des revendications 1 à 4, un corps (60) du dispositif électronique et une interface (61) de données ;
l'interface (61) de données est reliée à l'ensemble (62) de rotateur via un trou de machine et le corps (60) du dispositif électronique est relié à l'ensemble (10 ; 40) d'embase via un trou de machine ; ou l'interface (61) de données est reliée à l'ensemble (10 ; 40) d'embase via un trou de machine et le corps (60) du dispositif électronique est relié à l'ensemble (11 ; 41) de rotateur via un trou de machine ;
le corps (60) du dispositif électronique comporte une coque et une carte à circuits, la carte à circuits étant placée à l'intérieur d'un espace délimité par la coque ;
l'interface (61) de données est reliée électriquement à la carte à circuits, et la carte à circuits émet des données via l'interface (61) de données ; et
l'interface (61) de données peut pivoter par rapport au corps (60) du dispositif électronique via le mécanisme rotatif.

6. Dispositif électronique selon la revendication 5 :
le dispositif électronique étant une carte de données ; un module de fonction de communications étant placé sur la carte à circuits, et étant configuré pour accéder à un réseau de communications sans fil ; et l'interface (61) de données étant une interface à bus série universel, USB.
